# EUROPEAN PATENT SPECIFICATION

(11) **EP 0 380 105 B1**
(45) Date of publication and mention of the grant of the patent: **01.04.1998**
(21) Application number: 90101516.4
(22) Date of filing: 25.01.1990
(51) Int. Cl.: G06F 13/42, G06F 13/40

(54) **Computer interface**
Rechnerschnittstelle
Interface pour ordinateur

(30) Priority: 27.01.1989 US 303785
(43) Date of publication of application: 01.08.1990
(73) Proprietor: Hughes Aircraft Company, Los Angeles, California 90045-0066 (US)
(72) Inventor: Davies, Steven P., Ontario, California 91761 (US); Richards, William A., Anaheim, California 92806 (US)
(74) Representative: Witte, Alexander, Dr.-Ing.

(56) References cited:
- EP-A- 0 189 638
- EP-A- 0 206 083
- US-A- 4 349 870
- US-A- 4 670 838

## Description

The present invention relates to a computer interface.

Such a computer interface is e.g. disclosed in U.S. patent No. 4,349,870.

The mentioned document discloses a single-chip microcomputer comprising among others a central processing unit, a serial I/O port and four parallel I/O ports. One of the parallel I/O ports is user programmable by application of specific signals to mode selection pins. The programmable port comprises a plurality of lines which each may be individually programmed as input or output lines to peripheral equipment.

Alternatively, the parallel port lines can be programmed to serve as a bidirectional data bus to external memory. The parallel port lines may also serve as multiplexed data and address lines to external memory.

The present invention generally relates to digital signal processing systems and in particular to a computer interface for use in such systems that performs input and output transfers between a signal processor and external hardware connected thereto.

The ability to perform sophisticated vector and scalar arithmetic operations in real time is a key requirement of signal processing systems. Often, however, this requirement is also accompanied by severe physical constraints upon the size, weight, power and cooling of the signal processing system. In the past, signal processor designers have had to compromise among competing requirements, many times resulting in processors with less than adequate performance.

Conventional signal processors may also be limited in performance due to relatively slow system clock rates of around five megahertz, and limited capability to operate on 16 bit fixed point data. The fixed point operational limitations of the such conventional signal processors has become significant in many application environments. Many signal processing algorithms require arithmetic computations having a large dynamic range, making 32 bit floating point processing necessary.

The ability to network modular signal processors allows a system to efficiently meet a wide range of applications. Many signal processors are limited in their capability for networking.

With reference to the present invention, the implementation of hardware which efficiently transfers control and data signals between hardware components in a wide variety of communications protocols is key to efficient operation of the signal processing system.

In view of the above it is an object of the present invention to provide for an efficient computer interface that transfers control and data signals between a signal processor and external devices.

According to the invention this object is achieved by a computer interface, comprising:
- serial control port means for coupling control signals between a serial input port and a control signal output port;
- first parallel port means for coupling control signals between a first parallel input port and the control signal output port and for coupling data signals between the first parallel input port and a data output port;
- second parallel port means for coupling data signals between a second parallel input port and the data output port;
- data transfer means coupled between the first and second parallel input ports and the data output port; and
- interface control means coupled between the data transfer means, the serial control and first parallel port means and the control signal output port for controlling and selectively coupling data signals between the first and second input ports and the data output port.

In order to provide for an efficient computer interface that transfers control and data signals using a variety of communications protocols between a signal processor and external devices, the present invention comprises a plurality of data and signal transfer ports, including one serial and four configurable parallel ports. The serial port is configured to couple control signals between the signal processor and the external devices. The first parallel port is also configured to couple control signals as well as data signals between the signal processor and the external devices.

The second parallel port is configured to couple data signals between the signal processor and the external devices, and the first and second parallel ports may be selectively coupled together to provide a data path having the combined data path of the first and second ports. Similarly, third and fourth parallel ports are configured to couple data signals between the signal processor and the external devices, and these two ports may also be selectively coupled together to provide a data path having the combined data path of the third and fourth ports.

A first interface controller is coupled to the serial and first parallel ports which processes control signals coupled between the external devices and the signal processor. When the first and second parallel ports are combined, they can also transfer control signals. A multiplexer is coupled between each of the parallel ports and a plurality of data busses having a data path of predetermined size which is compatible with the data path used in the signal processor. The multiplexer selectively couples data signals between the signal processor and the external devices along the two data busses. A second interface controller is coupled to the multiplexer which receives signals from the signal processor and applies the signals to the multiplexer to control the transfer of data signals between the external devices and tlie signal processor.

In order to increase the speed of operation of the computer interface, the present invention also provides for circuitry coupled to the serial and first parallel ports which controls tristate buffers on the control and data busses when in the parallel bus mode which provides open-collector characteristics, without sacrificing tristate buffer speed.

The various features and advantages of the present invention may be more readily understood with reference to the following detailed description taken in conjunction with the accompanying drawing, wherein like reference numerals designate like structural elements, and in which:
FIG. 1 is a block diagram of a signal processor incorporating an computer interface in accordance with the principles of the present invention;
FIG. 2 is a detailed block diagram of the computer interface of FIG. 1; and
FIGS. 3a-f show a diagram of circuitry which controls the tristate buffers of the computer interface of FIG. 2 along with timing diagrams therefor.

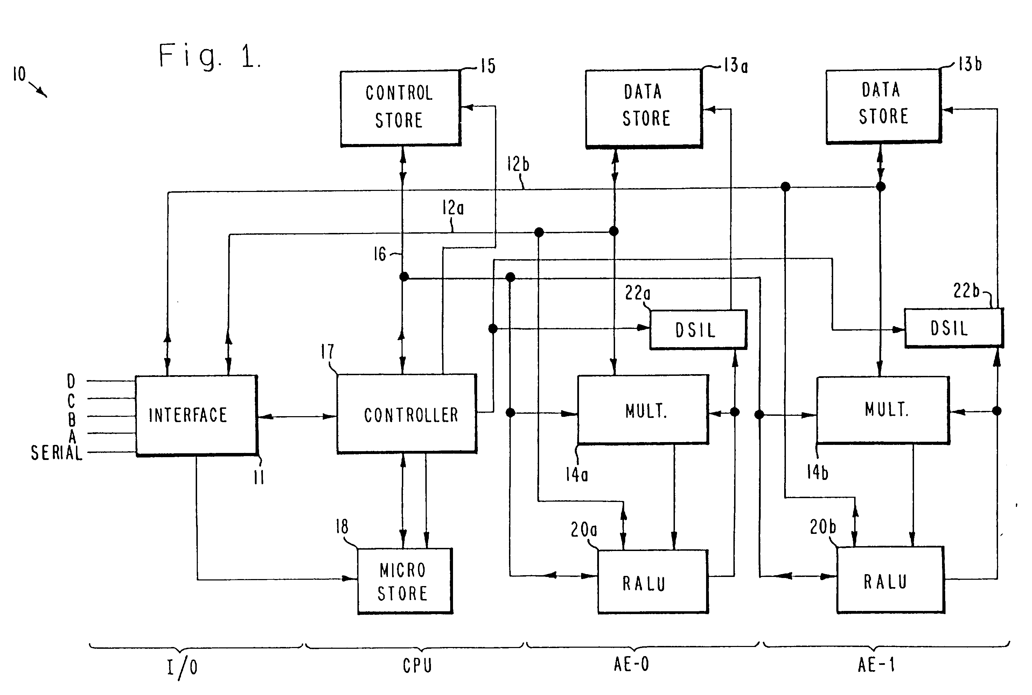

With reference to FIG. 1, a block diagram of a signal processor incorporating a computer interface 11 in accordance with the principles of the present invention is shown. The signal processor 10 will be described in general terms to provide a context for the describing the computer interface 11. The signal processor 10, shown in FIG. 1, generally comprises four main sections: an input/output section, designated as I/O, a central procession unit designated as CPU, and two arithmetic elements, designated as AE0 and AE1.

In particular, the input/output section includes the computer interface 11 which provides a plurality of configurable input/output ports. The computer interface 11 is coupled by way of data busses 12a, 12b to two data store memories 13a, 13b, which are employed to store data, and to two multipliers 14a, 14b, and two register and arithmetic logic units 20a, 20b which operate on the data. The data store memories 13a, 13b typically store data in a predefined packed format in order to conserve memory space, in a manner which is well-known in the art.

A control store memory 15, which is employed to store control codes, is coupled by way of a control store bus 16 to an arithmetic element controller 17, to the multipliers 14a, 14b and to two register and arithmetic logic units 20a, 20b. A micro store memory 18 is coupled to the arithmetic element controller 17 and is employed to store microcode instructions which are utilized by the data store memories 13a, 13b, multipliers 14a, 14b, and the register and arithmetic logic units 20a, 20b.

The processor 10 generally functions as follows. Signals to be processed by the processor 10 are received by way of the external interface unit 11 and stored in the data store memories 13a, 13b. Microcode instructions defining the processing parameters of the arithmetic elements of the processor and what steps are to be performed by the arithmetic elements, AE0, AE1, are stored in the micro store memory 18. The application program consisting of pointers to microcode instructions, programmable coefficients to be used by the arithmetic elements during computations, and intermediate data processing results from the arithmetic elements are stored in the control store memory 15. The arithmetic element controller 17 executes application programs which cause the microcode instructions to be executed and the data to be processed. The arithmetic elements AEO, AE1, operate as parallel pipeline processors, to process the data in accordance with the microcode instructions, under control of the arithmetic element controller, and in a conventionally understood manner.

Control parameters are passed from the control store memory 15 to the multipliers 14a, 14b and the register and arithmetic logic units 20a, 20b, and the data from the data store memories 13a, 13b are processed by the arithmetic elements AE0 and AE1, under control of the arithmetic element controller 17 in a conventionally understood manner.

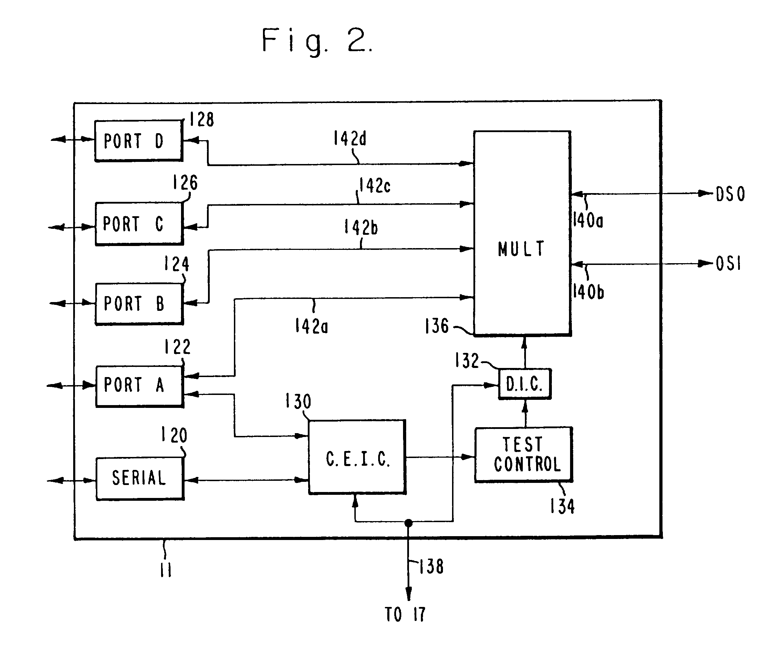

Referring to FIG.2, a detailed block diagram of the computer interface 11 of FIG. 1 is shown. The computer interface 11 comprises a serial control port 120 and four parallel ports 122, 124,1 26, 128. Each of the parallel ports are configured in substantially the same manner, with each having sixteen (16) data signal lines and four (4) control lines. The serial port 120 and the first parallel port 122 are employed to transfer control signals between external devices and the signals processor 10.

The serial port 120 and the first parallel port 122 are coupled to a first interface controller 130 which has inputs coupled to the arithmetic element controller 17 of the signals processor 10. The first interface controller 130 is also coupled to a test controller 134 which is employed to implement testing of the signal processor 10. A second interface controller 132 has an input coupled to the arithmetic element controller 17 in a manner similar to that of the first interface controller 130. The second interface controller 132 is also coupled to a multiplexer 136, or data transfer network as it is commonly known, which has four inputs coupled to each of the parallel ports 122, 124, 126, 128 and has two output ports coupled to the data busses 12a, 12b of the signal processor 10.

The computer interface 11 implements a variety of communications protocols. These protocols include a serial protocol which permits communication between one external device and up to sixteen (16) signal processors 10.

A sensor protocol employed to efficiently transfer data from sonar and radar senors to the signal processor 10 and from the signal processor 10 to the data processors or display or storage devices. The sensor protocol may operate in 16 bit or 32 bit modes which utilize 16 bit data busses 142. In this sensor mode, data may be transferred using any one or selected combinations of the four 16 bit busses to accomplish 16 bit and 32 bit data transfers.

A signal processor bus protocol is also available which employs a synchronous protocol. This protocol provides support for data transfers between signal processors. The signal processor bus protocol may operate in 16 bit or 32 bit modes which utilize 16 bit data busses 142. In this signal processor bus mode, data may also be transferred using any one or selected combinations of the four 16 bit busses to accomplish 16 bit and 32 bit data transfers. In the present invention parallel ports A and B 122, 124 may be combined and parallel ports C and D 126, 128 may be combined, but such combinations are only indicated for the purposes of their implementation in the signal processor 10. In other applications, other ports may be combined by those skilled in the art as the particular application arises.

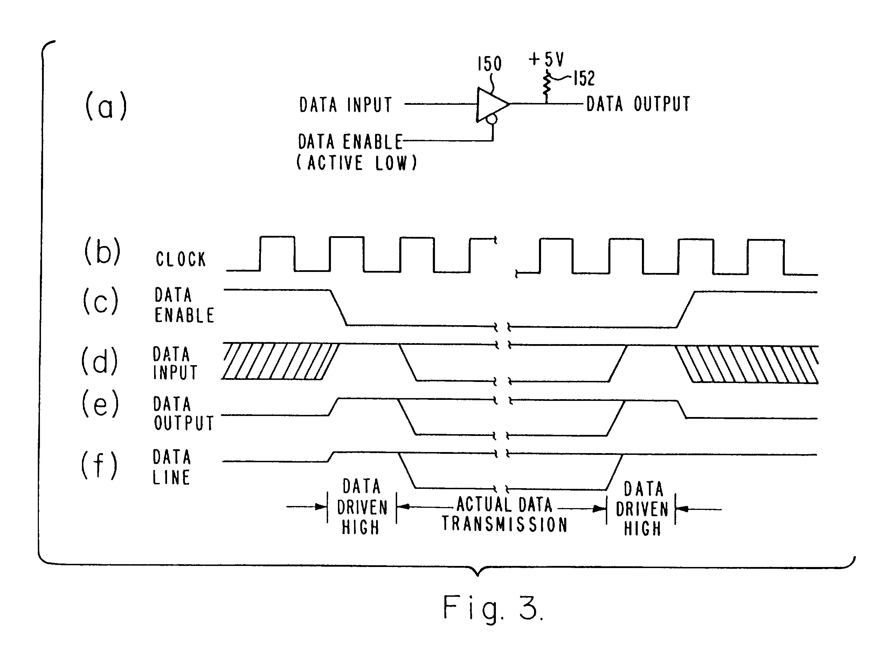

In the bus protocol, the present invention takes advantage of the circuitry which implements control of tristate buffers provided at the inputs of each of the parallel ports 122, 124, 126, 128. Fig. 3a illustrates the tristate buffer scheme implemented in accordance with the present invention. This scheme includes a buffer amplifier 150 and a pull-up resistor 152 coupled between a voltage source and the data output of the amplifier 150. Input data signals and data enable signals are applied to the amplifier 150 in the manner shown in FIG. 3a.

The tristate buffer control scheme operates as follows. The data input signals are preceded and followed by a high voltage level ("1") for one clock cycle to drive the data lines to a known state before and after each transmission. The resistor 152 is a line terminator resistor with a drive voltage level chosen to maintain the known value of "1". However, the pull-up resistor 152 and drive voltage level are normally sufficient to drive the tristated lined to a high state fast enough to allow for open collector buffers. FIGS. 3b-f show timing diagrams illustrating the operation of the circuit of FIG. 3a, and these diagrams should be self explanatory and well-understood by those skilled in the art.

The following tables 1a-3d define all the parameters for each of the ports including control signal definitions, control signals associated with each of the ports, message formats, error handling and valid external functions (EXFs).

**Table 1a.**

| **Port A Control Signal Definition** | | | | |
|---|---|---|---|---|
| **Config.** | **CONTSIGA(3)** | **CONTSIGA(2)** | **CONTSIGA(1)** | **CONTSIGA(0)** |
| 16 bit bus | BID_L | DATAV_L | BIDVAL_L | CLK |
| 32 bit bus | BID_L | DATAV_L | BIDVAL_L | CLK |
| 16 bit sensor input mode | SYNC_L | ACK_L | VSPEN_L | DATAV_L |
| 16 bit sensor output mode | SYNC_L | DATAV_L | VSPEN_L | DATARQ_L |
| 32 bit sensor input mode | SYNC_L | ACK_L | VSPEN_L | DATAV_L |
| 32 bit sensor output mode | SYNC_L | DATAV_L | VSPEN_L | DATARQ_L |

**Table 1b.**

| **Port B Control Signal Definition** | | | | |
|---|---|---|---|---|
| **Config.** | **CONTSIGB(3)** | **CONTSIGB(2)** | **CONTSIGB(1)** | **CONTSIGB(0)** |
| 16 bit bus | BID_L | DATAV_L | BIDVAL_L | CLK |
| 32 bit bus | n/a | n/a | n/a | n/a |
| 16 bit sensor input mode | SYNC_L | ACK_L | VSPEN_L | DATAV_L |
| 16 bit sensor output mode | SYNC_L | DATAV_L | VSPEN_L | DATARQ_L |
| 32 bit sensor input mode | addr(3) of source | addr(2) of source | addr(1) of source | addr(0) of source |
| 32 bit sensor output mode | addr(3) of dest. | addr(2) of dest. | addr(1) of dest. | addr(0) of dest. |

**Table 1c.**

| **Port C Control Signal Definition** | | | | |
|---|---|---|---|---|
| **Config.** | **CONTSIGC(3)** | **CONTSIGC(2)** | **CONTSIGC(1)** | **CONTSIGC(0)** |
| 16 bit bus | BID_L | DATAV_L | BIDVAL_L | CLK |
| 32 bit bus | BID_L | DATAV_L | BIDVAL_L | CLK |
| 16 bit sensor input mode | SYNC_L | ACK_L | VSPEN_L | DATAV_L |
| 16 bit sensor output mode | SYNC_L | DATAV_L | VSPEN_L | DATARQ_L |
| 32 bit sensor input mode | SYNC_L | ACK_L | VSPEN_L | DATAV_L |
| 32 bit sensor output mode | SYNC_L | DATAV_L | VSPEN_L | DATARQ_L |

**Table 1d.**

| **Port D Control Signal Definition** | | | | |
|---|---|---|---|---|
| **Config.** | **CONTSIGD(3)** | **CONTSIGD(2)** | **CONTSIGD(1)** | **CONTSIGD(0)** |
| 16 bit bus | BID_L | DATAV_L | BIDVAL_L | CLK |
| 32 bit bus | n/a | n/a | n/a | n/a |
| 16 bit sensor input mode | SYNC_L | ACK_L | VSPEN_L | DATAV_L |
| 16 bit sensor output mode | SYNC_L | DATAV_L | VSPEN_L | DATARQ_L |
| 32 bit sensor input mode | addr(3) of source | addr(2) of source | addr(1) of source | addr(0) of source |
| 32 bit sensor output mode | addr(3) of dest. | addr(2) of dest. | addr(1) of dest. | addr(0) of dest. |

The serial port 120 is a control and data transfer port. It has the following control and data signals:

**Table 2a.**

| **Serial Port Description** | | | |
|---|---|---|---|
| **Control signals:** | **Type:** | **Direction:** | **Description:** |
| SCLOCK | control | input | serial port clock |
| DATA_EN_L | control | input | data enable |
| OUT_RQ_L | control | output | output request |
| INTR_RQ_L | control | output | interrupt request |
| SDATAIO | data | bidirectional | serial data |

The serial port 120 employs a serial packet message format. The serial port error handling is such that transfer is terminated and INTR_RQ_L is asserted if an undefined or invalid EXF occurs. The control element must read the signal processor 10 status to determine the error type. Valid EXFs include all except INTR, LDAT and MAIL

In 16 bit and 32 bit bus modes, port A (16 bit) and port AB (32 bit) operate as control and data transfer ports. All ports operate as data transfer ports. However, in other applications, all port configurations may be employed as control and data transfer ports if desired.

**Table 2b.**

| **Parallel Port Description** | | | |
|---|---|---|---|
| **Signals:** | **Type:** | **Direction:** | **Description:** |
| CLK | control | bidirectional | clock |
| BIDVAL_L | control | bidirectional | bid period valid |
| DATAV_L | control | bidirectional | data valid |
| BID_L | control | bidirectional | bid line |
| DPORTA(15:0) | data | bidirectional | data |
| DPORTB(15:0) | data | bidirectional | data |
| DPORTC(15:0) | data | bidirectional | data |
| DPORTD(15:0) | data | bidirectional | data |
| DPORTAB(31:0) | data | bidirectional | data |
| DPORTCD(31:0) | data | bidirectional | data |

In 16 bit and 32 bit bus modes, all parallel ports 122, 124, 126, 128 employ a packet message format. The parallel port error handling is such that the destination device will send an "ACK/NAK status word" back to the source device after the packet transfer is completed. The transfer is not accepted (NAK) if the status word indicates a work count error, diagonal parity error, FIFO overflow, or undefined or invalid EXF; otherwise, the packet is accepted (ACK). If a NAK is received, the source device will retransmit the packet up to 7 more times, for a total of 8 transmission attempts, then abort the transfer and (if the source device is a signal processor) set the "port output error" flag in the computer interface status word. If the source detects a bus collision during the transfer, it will abort the transfer and retry. If the bus goes into a masterless state, it will initiate the recovery sequence. All EXFs are valid if ports A or AB are the control port; otherwise, only LDAT, MAIL and PORT are valid. LDAT and MAIL are valid EXFs for ports B, C, D and CD. With reference to bidding, and the bid period and bid line signals recited in the above tables, this subject is well known in the signal processing art, and reference to the text *Computer Networks*, by Andrew S. Tanenbaum, at page 296, entitled "A Bit Map Protocol," Prentice Hall, 1986, which details a time slice bidding technique which may be employed in the interface unit of the present invention.

In 16 bit sensor mode, the parallel ports operate as input or output data transfer ports. For the input and output modes, respectively, identified in the direction column, the following apply as indicated:

**Table 2c.**

| **Parallel Port Description - 16 bit sensor input mode** | | | |
|---|---|---|---|
| **Signals:** | **Type:** | **Direction:** | **Description:** |
| DATAV_L | control | input | data available |
| VSPEN_L | control | input | signal proc. enable |
| ACK_L | control | output | data acknowledge |
| SYNC_L | control | input | sync |
| DPORTA(15:0) | data | input | data |
| DPORTB(15:0) | data | input | data |
| DPORTC(15:0) | data | input | data |
| DPORTD(15:0) | data | input | data |

**Table 2d.**

| **Parallel Port Description - 16 bit sensor output mode** | | | |
|---|---|---|---|
| **Signals:** | **Type:** | **Direction:** | **Description:** |
| DATARQ_L | control | input | data request |
| VSPEN_L | control | input | signal proc. enable |
| DATAV_L | control | output | data available |
| SYNC_L | control | output | sync |
| DPORTA(15:0) | data | output | data |
| DPORTB(15:0) | data | output | data |
| DPORTC(15:0) | data | output | data |
| DPORTD(15:0) | data | output | data |

In 16 bit sensor mode, all parallel ports 122, 124, 126, 128 employ a data only message format. The parallel port error handling is such that if a protocol error occurs, the transfer will be aborted, the port will be put in an idle state, and the "port sync handshake error" flag in the computer interface status word will be set. EXFs are not applicable.

In 32 bit sensor mode, and for the input and output modes, respectively, identified in the direction column below, the following apply as indicated:

**Table 2e.**

| **Parallel Port Description - 32 bit sensor input mode** | | | |
|---|---|---|---|
| **Signals:** | **Type:** | **Direction:** | **Description:** |
| DATAV_L | control | input | data available |
| VSPEN_L | control | input | signal proc. enable |
| ACK_L | control | output | data acknowledge |
| SYNC_L | control | input | sync |
| ADDRB(3:0) | data | input | source device addr. |
| ADDRD(3:0) | data | input | source device addr. |
| DPORTAB(31:0) | data | input | data |
| DPORTCD(31:0) | data | input | data |

**Table 2f.**

| **Parallel Port Description - 32 bit sensor output mode** | | | |
|---|---|---|---|
| **Signals:** | **Type:** | **Direction:** | **Description:** |
| DATARQ_L | control | input | data request |
| VSPEN_L | control | input | signal proc. enable |
| DATAV_L | control | output | data available |
| SYNC_L | control | output | sync |
| ADDRB(3:0) | data | output | destination device addr. |
| ADDRD(3:0) | data | output | destination device addr. |
| DPORTAB(31:0) | data | output | data |
| DPORTCD(31:0) | data | output | data |

As in the case of the 16 bit parallel ports, the error handling and external functions are the same.

The following Tables 3a-3d provide a description of all external functions for the computer interface 11.

**Table 3a.**

| **Control EXFs** | | | | | | | | | |
|---|---|---|---|---|---|---|---|---|---|
| **Name** | **Code** | **Description** | **Data Words** | **Reply Type** | **Reply Words** | **State** | | **Port** | |
| | | | | | | **Run** | **Halt** | **Ctrl** | **Data** |
| RUN | 05 | begin execution | 1 | (1) | (2) | no | yes | yes | no |
| RSET | 11 | micro halt & reset | 0 | | | yes | yes | yes | no |
| HALT | 13 | HOL halt | 0 | | | yes | yes | yes | no |
| IOCF | 08 | configure port | 1 | | | yes | yes | yes | no |
| PORT | 12 | select CP | 0 | | | no | yes | yes | no |
| Note (1) If the control port is serial, the INTR_RQ_L signal goes active and the CE# must read status (RSTA) to interpret interrupt. | | | | | | | | | |
| Note (2) If the control port is parallel, the IMTR EXF is sent with 2 data words to the CE. | | | | | | | | | |

**Table 3b.**

| **Data Transfer EXFs** | | | | | | | | | |
|---|---|---|---|---|---|---|---|---|---|
| **Name** | **Code** | **Description** | **Data Words** | **Reply Type** | **Reply Words** | **State** | | **Port** | |
| | | | | | | **Run** | **Halt** | **Ctrl** | **Data** |
| LDAT | 40 | send data | var. | | | yes | no | yes | yes |
| MAIL | 41 | send mail | var. | | | yes | no | yes | yes |
| CDAT | 7E | CE reply data | var. | | | yes | yes | yes | no |
| INTR | 7F | send interrupt (1) | 2 | | | yes | yes | yes | no |
| Note (1) INTR can only be sent over a parallel control port from the signal processor to the arithmetic control element. | | | | | | | | | |

**Table 3c.**

| **Register EXFs** | | | | | | | | | |
|---|---|---|---|---|---|---|---|---|---|
| **Name** | **Code** | **Description** | **Data Words** | **Reply Type** | **Reply Words** | **State** | | **Port** | |
| | | | | | | **Run** | **Halt** | **Ctrl** | **Data** |
| LMBP | 06 | load MS breakpoint | 1 | | | no | yes | yes | no |
| LDBP | 07 | load DS/CS breakpt 2 | | | | no | yes | yes | no |
| RSTA | 31 | read status | 0 | CDAT | 2 | yes | no | yes | no |
| RMPC | 23 | read MPC | 0 | CDAT | 1 | no | yes | yes | no |
| RCSC | 33 | read CSAC / CP | 0 | CDAT | 1 | no | yes | yes | no |
| RDSC | 36 | read DSAC/DSSR | 0 | CDAT | 1 | no | yes | yes | no |
| RBMK | 34 | read MS breakpt | 0 | CDAT | 1 | no | yes | yes | no |
| RDBK | 35 | read DS/CS breakpt | 0 | CDAT | 2 | no | yes | yes | no |
| LMSC | 21 | load MS control | 2 | | | no | yes | yes | no |
| LCSC | 22 | load CS control | 2 | | | no | yes | yes | no |
| LDC0 | 23 | load DS0 control | 2 | | | no | yes | yes | no |
| LDC1 | 24 | load DS1 control | 2 | | | no | yes | yes | no |
| RCMS | 5B | read MS control | 1 | CDAT | 1 | no | yes | yes | no |
| RCCS | 5C | read CS control | 1 | CDAT | 1 | no | yes | yes | no |
| RCD0 | 5D | read DS0 control | 1 | CDAT | 1 | no | yes | yes | no |
| RCD1 | 5E | read DS1 control | 1 | CDAT | 1 | no | yes | yes | no |

**Table 3d.**

| **Test EXFs** | | | | | | | | | |
|---|---|---|---|---|---|---|---|---|---|
| **Name** | **Code** | **Description** | **Data Words** | **Reply Type** | **Reply Words** | **State** | | **Port** | |
| | | | | | | **Run** | **Halt** | **Ctrl** | **Data** |
| SCNL | 09 | scan in long path | var. | | | no | yes | yes | no |
| SCNS | 0A | scan in short path | var. | | | no | yes | yes | no |
| TEST | 61 | begin test | 1. | | | no | yes | yes | no |
| SOUT | 7A | scan out | 1 | CDAT | var. | no | yes | yes | no |
| WTMS | 62 | write test MS | 2 | | | no | yes | yes | no |
| WTCS | 63 | write test CS | 3 | | | no | yes | yes | no |
| WTD0 | 64 | write test D0 | 3. | | | no | yes | yes | no |
| WTD1 | 65 | write test D1 | 3 | | | no | yes | yes | no |
| RTMS | 66 | read test MS | 2 | CDAT | 1 | no | yes | yes | no |
| RTCS | 67 | read test CS | 3 | CDAT | 1 | no | yes | yes | no |
| RTDO | 68 | read test D0 | 3 | CDAT | 1 | no | yes | yes | no |
| RTD 1 | 69 | read test D1 | 3 | CDAT | 1 | no | yes | yes | no |

Thus there has been described a new and improved computer interface which provides for an efficient signal processor interface that transfers control and data signals using a variety of communications protocols between a signal processor and external devices. The computer interface comprises a plurality of data and signal transfer ports, including one serial and four configurable parallel ports. In addition, and in order to increase the speed of operation of the computer interface, the present invention also provides for circuitry which controls tristate buffers on the control and data busses coupled to the serial and first parallel ports when operating in 16 bit bus mode which provides open-collector characteristics with tristate driver speeds.

## Claims

1. A computer interface, comprising:
- serial control port means (120, 130) for coupling control signals between a serial input port (120) and a control signal output port (138);
- first parallel port means (122, 130) for coupling control signals between a first parallel input port (122) and the control signal output port (138) and for coupling data signals between the first parallel input port (122) and a data output port;
- second parallel port means (124) for coupling data signals between a second parallel input port (124) and the data output port;
- data transfer means (136) coupled between the first and second parallel input ports (122, 124) and the data output port; and
- interface control means (132) coupled between the data transfer means (136), the serial control and first parallel port means (120, 130; 122, 130) and the control signal output port (138) for controlling and selectively coupling data signals between the first and second input ports (122, 124) and the data output port.

2. The computer interface of claim 1, characterized by:
- means for controlling tristate buffers (150, 152) on the control and data buses when the interface (11) is employed in a predetermined parallel transfer mode to provide for open-collector characteristics.

3. The computer interface of claim 1 or 2, characterized by:
- the first parallel port means (122, 130) comprises a first 16 bit parallel port for bidirectionally coupling control signals between the first parallel input port (122) and the control signal output port (138) and for bidirectionally coupling data signals between the first parallel input port (122) and the data output port; and
- the second parallel port means (124) comprises a second 16 bit parallel port for bidirectionally coupling data signals between the second parallel input port (124) and the data output port.

4. The computer interface of any of claims 1 - 3, wherein the transfer and control means (132) is characterized by:
- selection means (132) for selectively coupling selected 16 bit parallel ports together to provide a 32 bit data path between the input ports (122, 124) and the data output port.

5. The computer interface of any of claims 1 - 3, wherein the transfer and control means (132) is characterized by:
- means (132) for selectively combining the first and second parallel port means to provide a data path having the combined data path of the first and second parallel port means (122, 130, 136; 124, 136) between the input ports (122, 124) and the data output port.

6. The computer interface of any of claims 1 - 5, being an interface between a signal processor and external devices and transferring control signals and data signals therebetween, characterized by:
- the serial control port means (120, 130) adapted to couple control signals between the signal processor and external devices;
- the first parallel port means (122, 124, 130) comprises a first parallel port (122) configured to couple control signals between the signal processor and external devices, and a second parallel port (124) configured to couple control signals between the signal processor and external devices, the first and second parallel ports (122, 124) being selectively configurable to provide a data path having the combined data path of the first and second ports (122, 124);
- the second parallel port means (126, 128) comprises a third parallel port (126) configured to couple control signals between the signal processor and external devices, and a fourth parallel port (128) configured to couple control signals between the signal processor and external devices, the third and fourth parallel ports (126, 128) being selectively configurable to provide a data path having the combined data path of the third and fourth ports (126, 128);
- a first interface controller (130) coupled to the serial and first parallel ports (120, 122) for processing control signals coupled between the external devices and the signal processor;
- a multiplexer (136) coupled between each of the parallel ports (122, 124, 126, 128) and a plurality of data buses (DSO, DS1) having a data path of predetermined size which is greater than the data paths of the parallel ports (122, 124, 126, 128), for selectively coupling data signals between the signal processor and the external devices along two data buses (DSO, DS1); and
- a second interface controller (132) coupled to the multiplexer (136) for receiving signals from the signal processor and applying the signal to the multiplexer (136) to control the transfer of data signals between the external devices and the signal processor.

## Patentansprüche

1. Computerschnittstelle mit
- einem seriellen Steuerungsanschlußmittel (120, 130) zur Übertragung von Steuersignalen zwischen einem seriellen Eingangsanschluß (120) und einem Steuersignal-Ausgangsanschluß (138);
- einem ersten parallelen Anschlußmittel (122, 130) zur Übertragung von Steuersignalen zwischen einem ersten parallelen Eingangsanschluß (122) und dem Steuersignal-Ausgangsanschluß (138) und zur Übertragung von Datensignalen zwischen dem ersten parallelen Eingangsanschluß (122) und einem Daten-Ausgangsanschluß;
- einem zweiten parallelen Anschlußmittel (124) zur Übertragung von Datensignalen zwischen einem zweiten parallelen Eingangsanschluß (124) und dem Daten-Ausgangsanschluß;
- einem Datenübertragungsmittel (136), das den ersten und den zweiten parallelen Eingangsanschluß (122, 124) mit dem Daten-Ausgangsanschluß verbindet; und
- einem Schnittstellen-Steuerungsmittel (132), das das Datenübertragungsmittel (136), das serielle Steuerungs- und das erste parallele Anschlußmittel (120, 130; 122, 130) mit dem Steuersignal-Ausgangsanschluß (138) verbindet, um Datensignale zwischen dem ersten und dem zweiten Eingangsanschluß (122, 124) und dem Daten-Ausgangsanschluß zu steuern und selektiv zu übertragen.

2. Computerschnittstelle nach Anspruch 1, gekennzeichnet durch Mittel zur Steuerung von Tri-State-Puffern (150, 152) auf den Steuerungs- und Datenbussen, wenn die Schnittstelle (11) in einem vorbestimmten parallelen Übertragungsmodus eingesetzt ist, um Offene-Kollektor-Eigenschaften zur Verfügung zu stellen.

3. Computerschnittstelle nach Anspruch 1 oder 2, dadurch gekennzeichnet, daß
- das erste parallele Anschlußmittel (122, 130) einen ersten parallelen 16 Bit Anschluß umfaßt zur bidirektionalen Übertragung von Steuersignalen zwischen dem ersten parallelen Eingangsanschluß (122) und dem Steuersignal-Ausgangsanschluß (138) und zur bidirektionalen Übertragung von Datensignalen zwischen dem ersten parallelen Eingangsanschluß (122) und dem Daten-Ausgangsanschluß; und
- das zweite parallele Anschlußmittel (124) einen zweiten parallelen 16 Bit Anschluß umfaßt zur bidirektionalen Übertragung von Datensignalen zwischen dem zweiten parallelen Eingangsanschluß (124) und dem Daten-Ausgangsanschluß.

4. Computerschnittstelle nach einem der Ansprüche 1 bis 3, wobei das Übertragungs- und Steuerungsmittel (132) gekennzeichnet ist durch ein Auswahlmittel (132) zur selektiven Verbindung ausgewählter paralleler 16 Bit Anschlüsse, um einen 32 Bit Datenpfad zwischen den Eingangsanschlüssen (122, 124) und dem Daten-Ausgangsanschluß zu schaffen.

5. Computerschnittstelle nach einem der Ansprüche 1 bis 3, wobei das Übertragungs- und Steuerungsmittel (132) gekennzeichnet ist durch ein Mittel zur selektiven Kombination des ersten und des zweiten parallelen Anschlußmittels, um einen Datenpfad zu schaffen, der den kombinierten Datenpfad des ersten und des zweiten parallelen Anschlußmittels (122, 130, 136; 124, 136) zwischen den Eingangsanschlüssen (122, 124) und dem Daten-Ausgangsanschluß umfaßt.

6. Computerschnittstelle nach einem der Ansprüche 1 bis 5, die eine Schnittstelle zwischen einem Signalprozessor und externen Vorrichtungen ist und zwischen diesen Steuersignale und Datensignale überträgt, gekennzeichnet durch
- das serielle Steuerungsanschlußmittel (120, 130), das zur Übertragung von Steuersignalen zwischen dem Signalprozessor und externen Vorrichtungen ausgebildet ist;
- das erste parallele Anschlußmittel (122, 124, 130), das einen ersten parallelen Anschluß (122) umfaßt, der zur Übertragung von Steuersignalen zwischen dem Signalprozessor und externen Vorrichtungen konfiguriert ist, und einen zweiten parallelen Anschluß (124) umfaßt, der zur Übertragung von Steuersignalen zwischen dem Signalprozessor und externen Vorrichtungen konfiguriert ist, wobei der erste und der zweite parallele Anschluß (122, 124) selektiv konfigurierbar sind, um einen Datenpfad zu schaffen, der den kombinierten Datenpfad des ersten und des zweiten Anschlusses (122, 124) umfaßt;
- das zweite parallele Anschlußmittel (126, 128), das einen dritten parallelen Anschluß (126) umfaßt, der zur Übertragung von Steuersignalen zwischen dem Signalprozessor und externen Vorrichtungen konfiguriert ist, und einen vierten parallelen Anschluß (128) umfaßt, der zur Übertragung von Steuersignalen zwischen dem Signalprozessor und externen Vorrichtungen konfiguriert ist, wobei der dritte und der vierte parallele Anschluß (126, 128) selektiv konfigurierbar sind, um einen Datenpfad zu schaffen, der den kombinierten Datenpfad des dritten und des vierten Anschlusses (126, 128) umfaßt;
- eine erste Schnittstellensteuerung (130), die mit dem seriellen und dem ersten parallelen Anschluß (120, 122) verbunden ist, um die zwischen den externen Vorrichtungen und dem Signalprozessor übertragenen Steuersignale zu verarbeiten;
- einen Multiplexer (136), der zwischen jeden der parallelen Anschlüsse (122, 124, 126, 128) und einer Vielzahl von Datenbussen (DSO, DS1) gekoppelt ist, die einen Datenpfad mit vorbestimmter Größe aufweisen, die größer ist als die Größe der Datenpfade der parallelen Anschlüsse (122, 124, 126, 128), um Datensignale selektiv zwischen dem Signalprozessor und den externen Vorrichtungen über die zwei Datenbusse (DSO, DS1) zu übertragen; und
- eine zweite Schnittstellensteuerung (132), die mit dem Multiplexer (136) verbunden ist, um Signale des Signalprozessors zu empfangen und das Signal dem Multiplexer (136) zuzuführen, um die Übertragung der Datensignale zwischen den externen Vorrichtungen und dem Signalprozessor zu steuern.

## Revendications

1. Interface d'ordinateur comportant :
- un moyen de port de commande série (120, 130) pour coupler des signaux de commande entre un port d'entrée série (120) et un port de sortie de signal de commande (138) ;
- un premier moyen de port parallèle (122, 130) pour coupler des signaux de commande entre un premier port d'entrée parallèle (122) et le port de sortie de signal de commande (138) et pour coupler des signaux de données entre le premier port d'entrée parallèle (122) et un port de sortie de données ;
- un second moyen de port parallèle (124) pour coupler des signaux de données entre un second port d'entrée parallèle (124) et le port de sortie de données ;
- un moyen de transfert de données (136) couplé entre le premier et le second port d'entrée parallèle (122, 124) et le port de sortie de données ; et
- un moyen de commande d'interface (132) couplé entre le moyen de transfert de données (136), le moyen de port de commande série et le premier moyen de port parallèle (120, 130 ; 122, 130) et le port de sortie de signal de commande (138) pour commander et coupler sélectivement les signaux de données entre le premier et le second port d'entrée (122, 124) et le port de sortie de données.

2. Interface d'ordinateur selon la revendication 1, caractérisée par :
- un moyen pour commander des tampons à trois états (150, 152) sur les bus de commande et de données lorsque l'interface (11) est utilisée dans un mode de transfert parallèle préétabli pour présenter des caractéristiques de collecteur ouvert.

3. Interface d'ordinateur selon la revendication 1 ou 2, caractérisée par :
- le premier moyen de port parallèle (122, 130) qui est constitué d'un premier port parallèle de 16 bits pour coupler bidirectionnellement des signaux de commande entre le premier port d'entrée parallèle (122) et le port de sortie de signal de commande (138) et pour coupler bidirectionnellement des signaux de données entre le premier port d'entrée parallèle (122) et le port de sortie de données ; et
- le second moyen de port parallèle (124) qui est constitué d'un second port parallèle de 16 bits pour coupler bidirectionnellement des signaux de données entre le second port d'entrée parallèle (124) et le port de sortie de données.

4. Interface de données selon l'une quelconque des revendications 1 à 3, dans laquelle les moyens de transfert et de commande (132) sont caractérisés par :
- un moyen de sélection (132) pour coupler sélectivement et regrouper des ports parallèles de 16 bits sélectionnés pour obtenir un chemin de données de 32 bits entre les ports d'entrée (122, 124) et le port de sortie de données.

5. Interface d'ordinateur selon l'une quelconque des revendications 1 à 3, dans laquelle les moyens de transfert et de commande (132) sont caractérisés par :
- un moyen (132) pour combiner sélectivement le premier et le second moyen de port parallèle pour obtenir un chemin de données ayant le chemin de données combiné du premier et du second moyen de port parallèle (122, 130, 136 ; 124, 136) entre les ports d'entrée (122, 124) et le port de sortie de données.

6. Interface d'ordinateur selon l'une quelconque des revendications 1 à 5, constituant une interface entre un processeur de signaux et des dispositifs externes et transférant des signaux de commande et des signaux de données entre les deux, caractérisée par :
- le moyen de port de commande série (120, 130) conçu pour coupler des signaux de commande entre le processeur de signaux et des dispositifs externes ;
- le premier moyen de port parallèle (122, 124, 130) qui est constitué d'un premier port parallèle (122) configuré pour coupler des signaux de commande entre le processeur de signaux et des dispositifs externes et un second port parallèle (124) configuré pour coupler des signaux de commande entre le processeur de signaux et des dispositifs externes, le premier et le second port parallèle (122, 124) étant sélectivement configurables pour obtenir un chemin de données ayant le chemin de données combiné du premier et du second port (122, 124) ;
- le second moyen de port parallèle (126, 128) qui est constitué d'un troisième port parallèle (126) configuré pour coupler des signaux de commande entre le processeur de signaux et des dispositifs externes et un quatrième port parallèle (128) configuré pour coupler des signaux de commande entre le processeur de signaux et des dispositifs externes, le troisième et le quatrième port parallèle (126, 128) étant sélectivement configurables pour obtenir un chemin de données ayant le chemin de données combiné des troisième et quatrième port (126, 128) ;
- un premier contrôleur d'interface (130) couplé au port série et au premier port parallèle (120, 122) pour traiter des signaux de commande couplés entre les dispositifs externes et le processeur de signaux ;
- un multiplexeur (136) couplé entre chacun des ports parallèles (122, 124, 126, 128) et une pluralité de bus de données (DS0, DS1) ayant un chemin de données d'une dimension préétablie, supérieure aux chemins de données des ports parallèles (122, 124, 126, 128) pour coupler sélectivement des signaux de données entre le processeur de signaux et les dispositifs externes le long de deux bus de données (DS0, DS1) ; et
un second contrôleur d'interface (132) couplé au multiplexeur (136) pour recevoir des signaux provenant du processeur de signaux et appliquer le signal au multiplexeur (136) pour commander le transfert de signaux de données entre les dispositifs externes et le processeur de signaux.
